# EUROPEAN PATENT SPECIFICATION

(11) **EP 3 956 578 B1**
(45) Date of publication and mention of the grant of the patent: **21.12.2022**
(21) Application number: 20720870.3
(22) Date of filing: 17.04.2020
(51) Int. Cl.: F16C 35/04, F16C 19/00

(54) **BEARING HOUSING AND VEHICLE CHASSIS COMPRISING SUCH BEARING HOUSINGS**
LAGERGEHÄUSE UND FAHRZEUGCHASSIS MIT SOLCHEN LAGERGEHÄUSEN
BOÎTIER DE PALIER ET CHÂSSIS DE VÉHICULE COMPRENANT DE TELS BOÎTIERS DE PALIER

(30) Priority: 17.04.2019 NL 2022965
(43) Date of publication of application: 23.02.2022
(73) Proprietor: Terberg Benschop B.V., 3405 XK Benschop (NL)
(72) Inventor: VAN ZOELEN, Ronald Cornelis Johannes, Nieuwegein (NL)
(74) Representative: Arnold & Siedsma
(86) International application number: PCT/NL2020/050257
(87) International publication number: WO 2020/214035

(56) References cited:
- EP-A1- 3 153 729
- CA-A- 617 237
- US-A- 1 877 257
- US-A- 2 872 253

## Description

The present invention relates to a bearing housing, and to a chassis that comprises two longitudinal beams, each comprising such a bearing housing.

In a prior art chassis construction of a tractor of the Applicant, an intermediate frame was arranged between two opposite and parallel extending longitudinal beams of the chassis. From each longitudinal beam, a shaft was extending inward towards the opposite longitudinal beam. A bearing was arranged around each of the shafts, and said bearing was clamped between the intermediate frame and a counterpart. Each of the intermediate frame and the counterpart comprised a recess that defined a half circle. In an assembled state and perfect alignment of the recesses of the intermediate frame and the counterpart, they together defined a bearing accommodation having a circular cross section. However, in practice it appeared difficult to obtain a perfect alignment of the recesses of the intermediate frame and the counterpart. This is partly caused by machining of the two halves as separate parts. Because of the difference in size, the two halves are machined on different machines. However, in order to have a perfectly aligned pivoting axis of the intermediate frame relative to the chassis, there is a need of a highly accurate positioning of the bearings and/or a highly accurate circular shape of the assembled parts. Moreover, said bearings should be able to withstand high forces and be reliable and preferably also be easy to replace during maintenance or repair work.

Bearing housings that likewise comprise two corresponding constructive parts, each defining approximately a half circle to clamp a bearing there between, are known from prior-art publications EP 3 153 729 A1; US 2 872 253 A; and CA 617 237 A.

US 2017/174077 A1 discloses a carrier bearing assembly having a opening for a bearing and comprising an integrally formed upper bracket assembly mounted on a lower bracket assembly by means of threaded bolt connections. The carrier bearing assembly known from US 2017/174077 A1 comprises the disadvantage that its threaded bolt connections are at risk of damaging or loosening when subjected to high forces, which renders said carrier bearing assembly unsuitable for very high load applications.

Reference is furthermore made to US 1,877,257 A, which is considered to constitute the closest prior-art, relative to which at least the characterizing features of claim 1 are novel. It discloses a bearing structure comprising a housing body mounted on a base. The housing body and base respectively comprise convex and concave spherical surfaces defining essentially a joint-like connection between said base and housing body, to permit aligning of a shaft arranged through a bearing within the housing body by tightening or loosening bolts that connect the housing body and the base.

An objective of the present invention is to provide a bearing housing that is easy to replace during maintenance or repair work and moreover improved relative to the prior art, in particular concerning the unsuitability of known bearing housings of the present type to withstand high forces resulting from high load applications.

Said objective is achieved with the bearing housing according to claim 1 of the present invention.

The oblique orientation of the guiding surfaces relative to each other, and of the setting surfaces relative to each other, decomposes high forces stemming from high loads that are exerted upon the bearing housing and in particular the bearing accommodation. Consequently, transmission of these high forces to the first housing part and any means connecting the first housing part and the second housing part, such as the pretensioner further elucidated here below, is significantly reduced. The risk that these components are deformed under these high forces is therefore significantly reduced, thereby resulting in a bearing house assembly that is easier maintained and more reliable than prior-art bearing housings.

Moreover, due to the engagement between the guiding surfaces and the setting surfaces, the first housing part automatically positions in the optimal position wherein it is locked against movement in the third direction. Normal machining of the first and second housing part may cause slight variations in dimensioning, but are normally only within a tolerance that does not negatively influence the above-mentioned automatic positioning of the second housing part relative to the first housing part. In this way, an accurate positioning of the bearing housing, and thus any bearing accommodated therein, is obtained.

Preferred embodiments are the subject of the dependent claims.

The various aspects and features described and shown in the specification can be applied, individually, wherever possible. These individual aspects, and in particular the aspects and features described in the attached dependent claims, may be made subject of divisional patent applications.

In the following description preferred embodiments of the present invention are further elucidated with reference to the drawing, in which:
Figure 1 is a side view of a vehicle comprising a bearing housing according to the invention;
Figure 2 is a perspective view of a vehicle chassis comprising a bearing housing according to the prior art;
Figure 3 is a perspective exploded view of a vehicle chassis of the vehicle shown in Figure 1, comprising a bearing housing according to the invention;
Figure 4 is a perspective view of an assembled state of the Figure 3 embodiment;
Figure 5 is a perspective view of a bearing housing according to the invention in an assembled state;
Figure 6 is a perspective view of the bearing housing of Figure 5 in a disassembled state;
Figure 7 is a side view of Figure 6;
Figure 8 is a side view of Figure 5;
Figure 9 is a side view of a bearing housing according to a second preferred embodiment; and
Figure 10 is a side view of a bearing housing according to a third preferred embodiment.

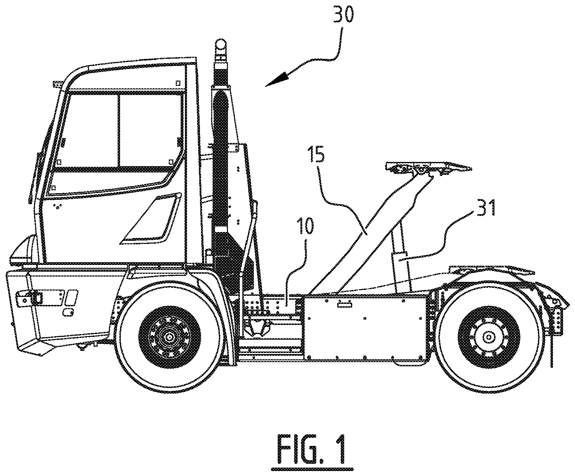

Figure 1 shows a vehicle, more in particular a so-called Terminal tractor, that comprises an intermediate frame 15 that is pivotably attached to the vehicle chassis 10 thereof by bearing housings 11 according the invention. The intermediate frame 15 can be lifted with a lift cylinder 31.

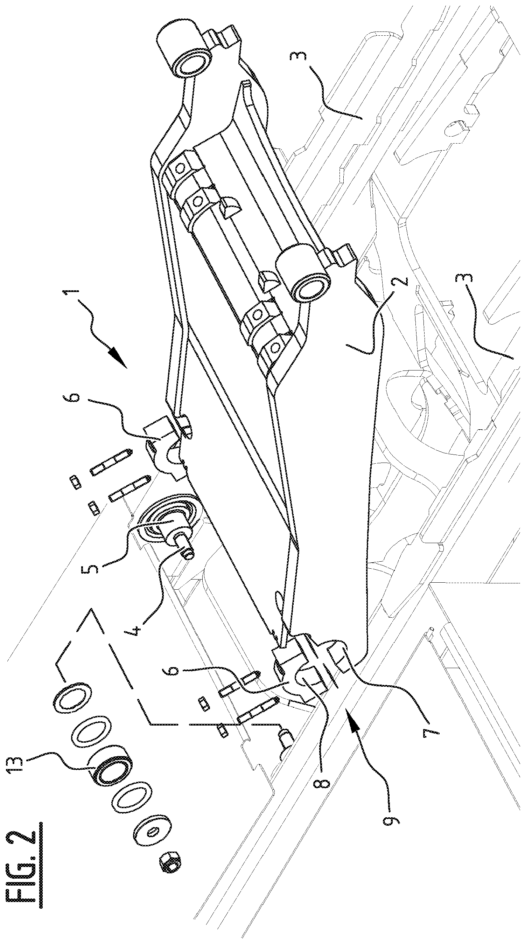

A prior art chassis construction as described above is shown in Figure 2. An intermediate frame 2 is arranged between two opposite and parallel extending longitudinal beams 3 of the chassis 1. From each longitudinal beam 3, a shaft 5 with a threaded part 4 extends inward towards the opposite longitudinal beam 3. A bearing 13 is arranged around each of the shafts 5, and said bearing 13 was clamped between the intermediate frame 2 and a counterpart 6. Each of the intermediate frame 2 and the counterpart 6 comprise a respective recess 7, 8 that defines a half circle. In an assembled state and perfect alignment of the recesses 7, 8 of the intermediate frame 2 and the counterpart 6, they together define a bearing accommodation 9 having a circular cross section.

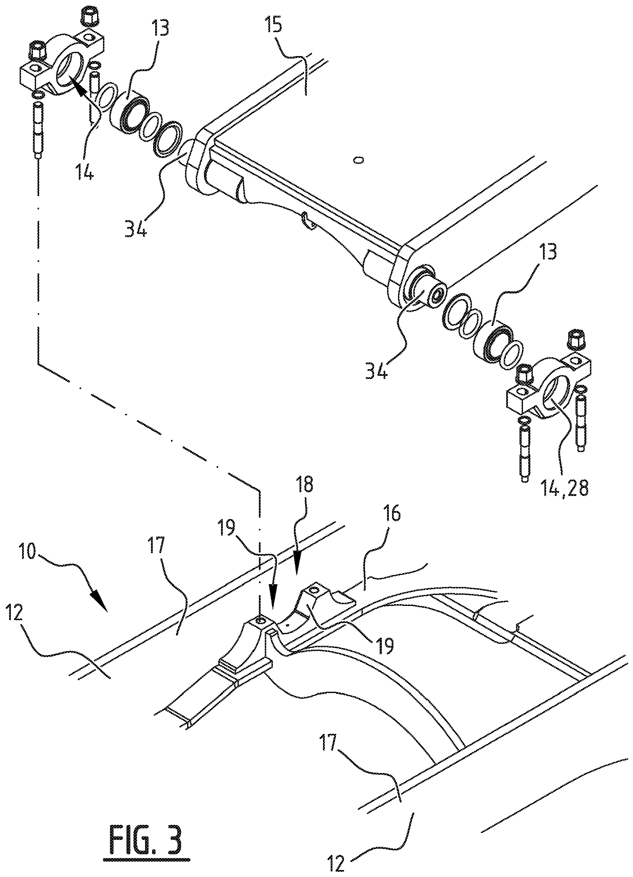

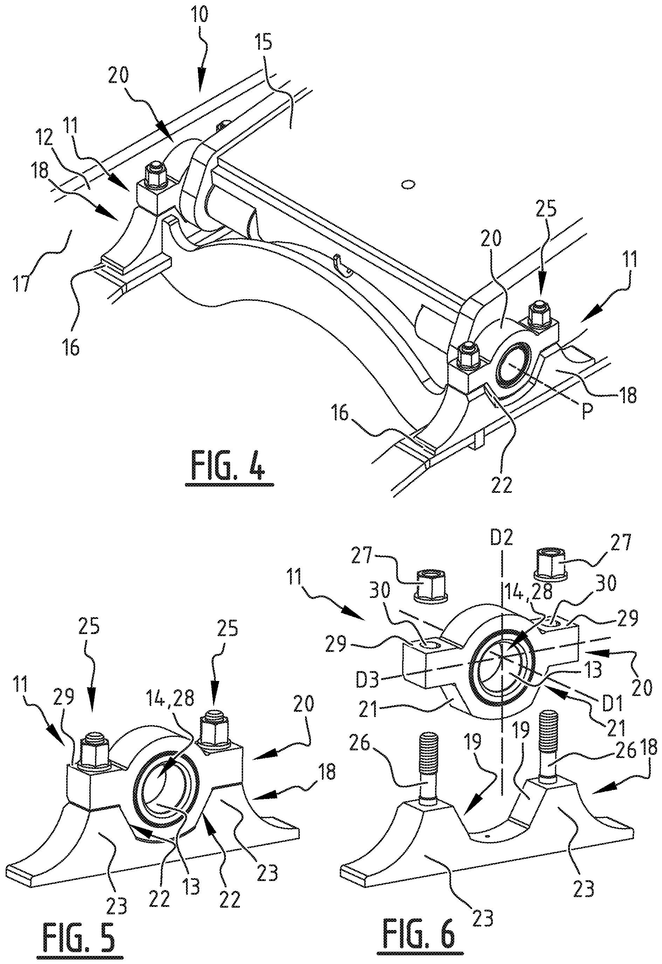

Figures 3 and 4 show a vehicle chassis 10 of the vehicle shown in Figure 1. The vehicle chassis 10 comprises two bearing housings 11 according to the invention. The vehicle chassis 10 comprises two longitudinal beams 12. Each longitudinal beam 12 comprises a bearing housing 11 with a bearing 13 arranged in the bearing accommodation 14 thereof. The vehicle chassis 10 further comprises an intermediate frame 15 having shafts 34 extending in opposite directions relative to said intermediate frame 15, wherein said shafts 34 are supported inside a respective bearing 13 of the bearing housing 11.

In the shown preferred embodiment, the longitudinal beams 12 of the vehicle chassis 10 have an L-shape of which a short leg 16 is oriented in a lying plane and a long leg 17 is oriented substantially upright. The bearing housings 11 and intermediate frame 15 are arranged between the long legs 17 of the longitudinal beams 12. In Figure 3 both long legs 17 of longitudinal beams 12 arranged on opposite sides of the chassis 10 are shown, whereas the long leg 17 is only shown at one side in Figure 4 in order to show the bearing housing 11 that is arranged directly behind it.

The bearing housing 11 according to the invention comprises a first housing part 18 comprising at least two guiding surfaces 19, and a second housing part 20 comprising at least two setting surfaces 21. The bearing housing 11 furthermore comprises the bearing accommodation 14 defining a first direction D1 therethrough.

The guiding surfaces 19 and the setting surfaces 21 are configured that, when they approach each other during assembly in a second direction D2 that is transverse to said first direction D1, the second housing part 20 is positioned and locked in a third direction D3 relative to the first housing part 18, wherein the third direction D3 is transverse to both the first direction D1 and the second direction D2. Thus, the second direction D2 is transverse to said first direction D1, and the third direction D3 is transverse to both the first direction D1 and the second direction D2 (Figure 6). In Figures 2 and 3, the third direction D3 extends in a longitudinal direction of the longitudinal beams 12. Consequently, two bearing housings 11 on opposite longitudinal beams 12 may securely position a pivot axis P of the intermediate frame 15 relative to the longitudinal beams 12 of the chassis 10. The pivot axis P coincides with the first direction D1.

The first housing part 18 may be arranged on or integrated with the vehicle chassis 10, as shown in Figures 3 and 4.

The guiding surfaces 19 and the setting surfaces 21 define a form fit at their interface 22 when the first housing part 18 and the second housing part 20 approach each other in the second direction D2 during assembly, i.e. when the second housing part 20 would be moved downward in Figure 6.

The guiding surfaces 19 and the setting surfaces 21 are oriented oblique relative to the second direction D2 and the third direction D3. This oblique orientation causes the second housing part 20 to slide into a desired position when it approaches and contacts the first housing part 18.

The oblique orientation of the guiding surfaces 19 relative to each other, and of the setting surfaces 21 relative to each other, is preferably in the range of 30-120°, more preferably in the range of 30-90° and most preferably in the range of 45-75°. If this angle α is about 60°, there is a force decomposition that is most optimized. Moreover, such a force decomposition may also prevent or minimize deformation of the second housing part 20, in particular when it is pretensioned towards the first housing part 18.

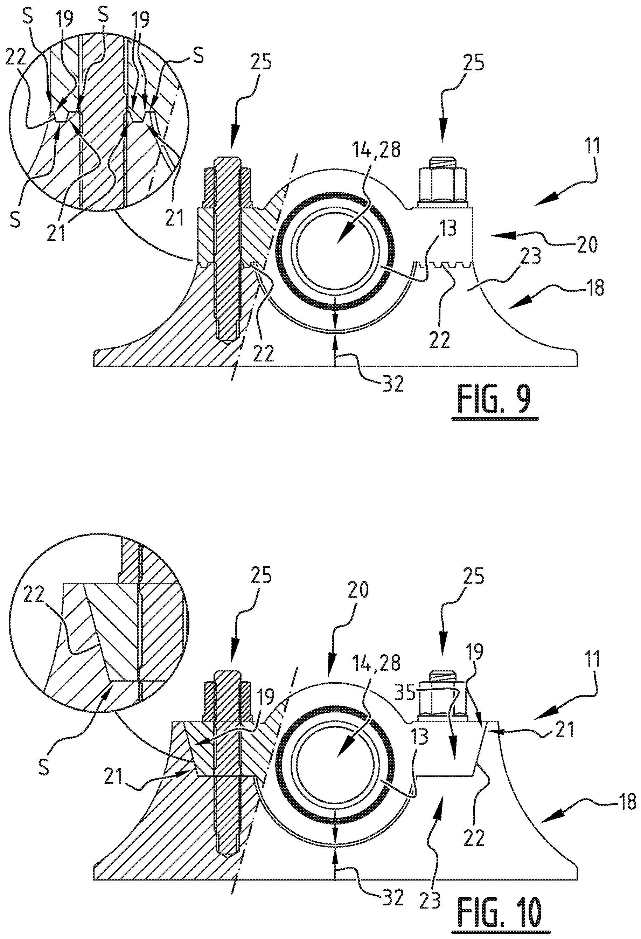

The first housing part 18 comprises at least two protrusions 23. Although it is conceivable that a plurality of more than two protrusions 23 form a tooth rack (Figure 9) that can be perceived as a plurality of sets of two adjacent protrusions 23, the preferred embodiment shown in e.g. Figures 5-8 comprises two protrusions 23. A base 33 is arranged between the protrusions 23 of the first housing part 18.

The at least two protrusions 23 of first housing part 18 define at least a part of a V-shape that defines the guiding surfaces 19. The second housing part 20 comprises an outer contour 24 that also defines at least a part of a V-shape. This V-shape of the second housing part 20 defines the setting surfaces 21 and it corresponds to the V-shape of the first housing part 18. Together, the V-shape of the first housing part 18 and the V-shape of the second housing part 20 define the interface 22 that is a load bearing interface.

The V-shape of at least one of the first housing part 18 and the second housing part 20 is a truncated V-shape, thereby allowing the bearing housing 11 to be relatively compact in the second direction D2, which is the height direction in a common use situation.

The bearing housing 11 further comprises a pretensioner 25 that is configured to pre-tension the guiding surfaces 19 and the setting surfaces 21 relative to each other in the second direction D2. In the shown embodiment, the pretensioner 25 comprises at least one bolt 26 and nut 27 assembly. More specifically, the pretensioner 25 of the shown embodiment comprises two bolt 26 and nut 27 assemblies that are arranged on opposite sides relative to the bearing accommodation 14.

Although it is conceivable that the first housing part 18 and the second housing part 20 each comprise a recess of a half circle to combine into a bearing accommodation, the bearing accommodation 14 is preferably formed by a through hole 28 inside said second housing part 20. In this way, the bearing accommodation 14 is fully enclosed, thereby allowing for an optimized load distribution. Moreover, a perfectly round through hole 28 may be easily obtained via drilling, whereas combining two circle halve to form a perfect circle is more difficult and requires highly accurate machining and positioning of the circle halves relative to each other.

The second housing part 20 may comprise two connectors 29 that are arranged on opposite sides relative to the bearing accommodation 14. As can be best seen in Figure 6, each of the two bolt 26 and nut 27 assemblies is arranged through an oversized through hole 30 in an associated connector 29 to allow play in the third direction D3. Furthermore, through hole 30 may be slotted to provide play in the first direction D1 to allow for a compensation for manufacturing tolerances between two first and second housing parts 18, 20 on the left and right side of the chassis 10.

In an assembled state of the first housing part 18 and the second housing part 20, the guiding surfaces 19 and the setting surfaces 21 define the only contact surfaces at their interface 22.

The bolt 26 and nut 27 assemblies of the pretensioner 25 are optionally arranged at an offset in the third direction D3 relative to a mid-section plane through first housing part 18 and perpendicular to the third direction D3. In a normal use situation, the third direction D3 extends in a substantially horizontal direction. The mating guiding surfaces 19 and setting surfaces 21 result in a load transfer between the first housing part 18 and the second housing part 20 with a relatively limited amount of stress on the bolt 26 and nut 27 assemblies of the pretensioner 25 compared to the prior art system as shown in Figure 2, where the bolt and nut assemblies are used for clamping counterpart 7 on intermediate frame 2.

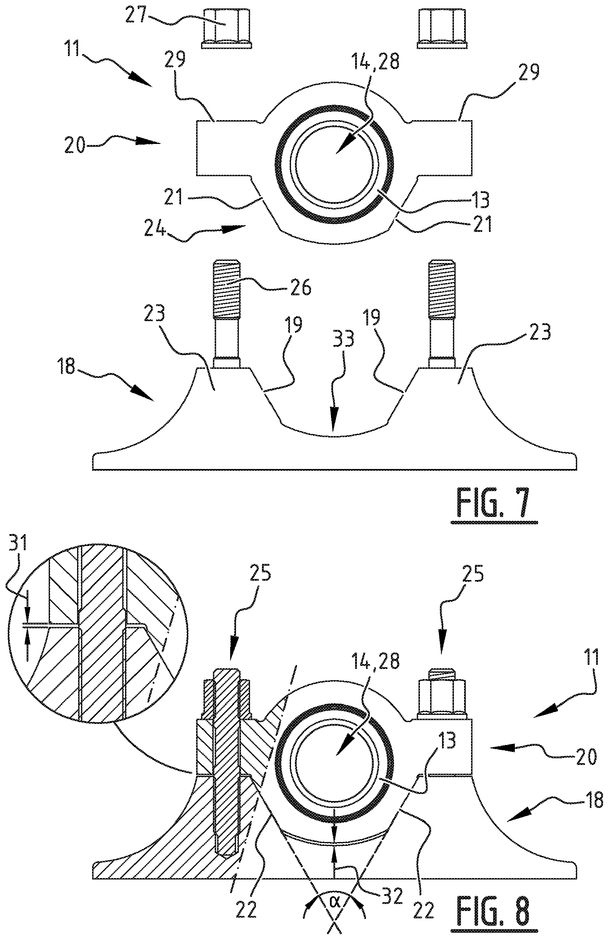

In the assembled state of the first housing part 18 and the second housing part 20 shown in Figure 8, there is an offset 31 in the second direction D2 between the protrusion 23 of the first housing part 18 and the associated connector 29 of the second housing part 20. In said assembled state shown in Figure 8, there is furthermore an offset 32 in the second direction D2 between a base 33, that is arranged between the protrusions 23 of the first housing part 18, and the second housing part 20. The offsets guarantee that the guiding surfaces 19 and the setting surfaces 21 define the only contact surfaces at their interface 22.

In the second and the third embodiments described here below, similar reference numbers apply to similar features as used in relation to the first embodiment of Figures 3-8.

In the second embodiment shown in Figure 9, the first housing part 18 comprises a plurality of guiding surfaces 19, and the second housing part 20 comprises a plurality of mating setting surfaces 21. The guiding surfaces 19 and setting surfaces 21 define a toothed interface 22 that provides a form fit between the first housing part 18 and the second housing part 20. In Figure 9, the guiding surfaces 19 of the first housing part 18 are arranged on top of the protrusions 23 of the first housing part 18.

In the third embodiment shown in Figure 10, the protrusions 23 of the first housing part 18 comprise a recess 35 that is configured to accommodate the second housing part 20. The wall of this recess 35 defines the guiding surfaces 19 of the first housing part 18. Outer side walls of the second housing part 20 form the setting surfaces 21 thereof.

It is remarked that the surfaces indicated with S in Figures 9 and 10 may comprise a (not shown) offset similar to offset 32, which would reduce the required machining tolerances.

The above described embodiments are intended only to illustrate the invention and not to limit in any way the scope of the invention. Accordingly, it should be understood that where features mentioned in the appended claims are followed by reference signs, such signs are included solely for the purpose of enhancing the intelligibility of the claims and are in no way limiting on the scope of the claims. The scope of the invention is defined solely by the following claims.

## Claims

1. Bearing housing, comprising:
- a first housing part (18) comprising a guiding surface (19);
- a second housing part (20) comprising a surface that is configured to abut against the guiding surface (19) of the first housing part (18);
- a bearing accommodation (14) formed by a through hole (28) inside said second housing part (20) and defining a first direction (D1) therethrough; and
- wherein the guiding surface (19) of the first housing part (18) and the surface of the second housing part (20) that is configured to abut against the guiding surface (19) of the first housing part (18) are configured that, when they approach each other during assembly in a second direction (D2) that is transverse to said first direction (D1), the second housing part (20) is positioned in a third direction (D3) relative to the first housing part (18), wherein the third direction (D3) is transverse to both the first direction (D1) and the second direction (D2),
**characterized in that**
- the first housing part (18) comprises at least two guiding surfaces (19);
- the second housing part (20) comprises at least two surfaces that are configured to abut against the guiding surface (19) of the first housing part (18), wherein said two surfaces are setting surfaces (21);
- the at least two guiding surfaces (19) and the at least two setting surfaces (21) are oriented oblique relative to the second direction (D2) and the third direction (D3) and configured that, when they approach each other during assembly in the second direction (D2), the second housing part (20) slides into a pre-determined position when it approaches and contacts the first housing part (18), and the second housing part (20) is locked in the third direction (D3) relative to the first housing part (18).

2. Bearing housing according to claim 1, wherein the guiding surfaces (19) and the setting surfaces (21) define a form fit at their interface (22) when the first housing part (18) and the second housing part (19) approach each other in the second direction (D2) during assembly.

3. Bearing housing according to claim 1 or 2, wherein the first housing part (18) comprises at least two protrusions (23).

4. Bearing housing according to claim 3, wherein:
- the at least two protrusions (23) of first housing part (18) define at least a part of a V-shape that defines the guiding surfaces (19); and
- the second housing part (20) comprises an outer contour (24) that defines at least a part of a V-shape that defines the setting surfaces (21) and that corresponds to the V-shape of the first housing part (18).

5. Bearing housing according to claim 4, wherein the V-shape of the first housing part (18) and the V-shape of the second housing part (20) define the interface (22) that is a load bearing interface.

6. Bearing housing according to claim 4 or 5, wherein the V-shape of at least one of the first housing part (18) and the second housing part (20) is a truncated V-shape.

7. Bearing housing according to any of the foregoing claims, comprising a pretensioner (25) that is configured to pre-tension the guiding surfaces (19) and the setting surfaces (21) relative to each other in the second direction (D2); and
- wherein the pretensioner (25) at least one of comprises:
- at least one bolt (26) and nut (27) assembly; and
- two bolt (26) and nut (27) assemblies that are arranged on opposite sides relative to the bearing accommodation (14).

8. Bearing housing according to any of the foregoing claims, wherein the second housing part (20) comprises two connectors (29) that are arranged on opposite sides relative to the bearing accommodation (14).

9. Bearing housing according to claims 7 and 8, wherein each of the two bolt (26) and nut (27) assemblies is arranged through an oversized through hole (30) in an associated connector (29) to allow play in the third direction (D3).

10. Bearing housing according to any of the foregoing claims, wherein, in an assembled state of the first housing part (18) and the second housing part (20), the guiding surfaces (19) and the setting surfaces (21) define the only contact surfaces at their interface (22).

11. Bearing housing according to any of the foregoing claims and at least claims 3 and 10, wherein, in an assembled state of the first housing part (18) and the second housing part (20), there is an offset (31) in the second direction (D2) between the protrusion (23) of the first housing part (18) and the associated connector (29) of the second housing part (20).

12. Bearing housing according to any of claims 3-11, wherein in an assembled state of the first housing part (18) and the second housing part (20), there is an offset (32) in the second direction (D2) between a base (33), that is arranged between the protrusion (23) of the first housing part (18), and the second housing part (20).

13. Bearing housing according to any of the foregoing claims, wherein the first housing part (18) is arranged on or integrated with a vehicle chassis (10).

14. Vehicle chassis, comprising:
- two longitudinal beams (12), each comprising a bearing housing (11) according to any of the claims 1-13 with a bearing (13) arranged in the bearing accommodation (14) thereof; and
- an intermediate frame (15) having shafts (34) extending in opposite directions relative to said intermediate frame (15), wherein said shafts (34) are supported inside a respective bearing (13) of the bearing housing (11).

15. Vehicle chassis according to claim 14, wherein:
- the longitudinal beams (12) have an L-shape of which a short leg (16) is oriented in a lying plane and a long leg (17) is oriented substantially upright;
- the long legs (17) of the longitudinal beams (12) enclose the bearing housings (11) and intermediate frame (15) there between; and
- wherein the third direction preferably extends in a longitudinal direction of the longitudinal beams (12).

## Patentansprüche

1. Lagergehäuse, aufweisend:
- ein erstes Gehäuseteil (18) mit einer Führungsfläche (19);
- ein zweites Gehäuseteil (20) mit einer Fläche, die so gestaltet ist, dass sie an der Führungsfläche (19) des ersten Gehäuseteils (18) anliegt;
- eine Lageraufnahme (14), die innerhalb des zweiten Gehäuseteils (20) durch ein Durchgangsloch (28) gebildet ist und eine erste Richtung (D1) durch dieses hindurch definiert; und
- wobei die Führungsfläche (19) des ersten Gehäuseteils (18) und die Fläche des zweiten Gehäuseteils (20), welche so gestaltet ist, dass sie an der Führungsfläche (19) des ersten Gehäuseteils (18) anliegt, so gestaltet sind, dass, wenn sie sich während der Montage in einer zweiten quer zu der ersten Richtung (D1) verlaufenden Richtung (D2) einander nähern, das zweite Gehäuseteil (20) relativ zu dem ersten Gehäuseteil (18) in einer dritten Richtung (D3) positioniert wird, wobei die dritte Richtung (D3) sowohl zu der ersten Richtung (D1) als auch zu der zweiten Richtung (D2) quer verläuft,
**dadurch gekennzeichnet, dass**
- das erste Gehäuseteil (18) zumindest zwei Führungsflächen (19) aufweist;
- das zweite Gehäuseteil (20) zumindest zwei Flächen aufweist, die so gestaltet sind, dass sie an den Führungsflächen (19) des ersten Gehäuseteils (18) anliegen, wobei diese beiden Flächen Sitzflächen (21) darstellen;
- die zumindest zwei Führungsflächen (19) und die zumindest zwei Sitzflächen (21) in Bezug auf die zweite Richtung (D2) und die dritte Richtung (D3) schräg ausgerichtet und so ausgebildet sind, dass, wenn sie sich während der Montage in der zweiten Richtung (D2) einander nähern, das zweite Gehäuseteil (20), wenn es sich dem ersten Gehäuseteil (18) nähert und dieses berührt, in eine vordefinierte Position gleitet, und das zweite Gehäuseteil (20) in Bezug auf das erste Gehäuseteil (18) in der dritten Richtung (D3) verriegelt ist.

2. Lagergehäuse nach Anspruch 1, wobei die Führungsflächen (19) und die Sitzflächen (21), wenn sich das erste Gehäuseteil (18) und das zweite Gehäuseteil (19) bei der Montage in der zweiten Richtung (D2) einander nähern, an ihrer Schnittstelle (22) einen Formschluss bilden.

3. Lagergehäuse nach Anspruch 1 oder 2, wobei das erste Gehäuseteil (18) mindestens zwei Vorsprünge (23) aufweist.

4. Lagergehäuse nach Anspruch 3, wobei:
- die mindestens zwei Vorsprünge (23) des ersten Gehäuseteils (18) zumindest einen Teil einer V-Form definieren, welche die Führungsflächen (19) definiert; und
- das zweite Gehäuseteil (20) eine Außenkontur (24) aufweist, die zumindest einen Teil einer die Sitzflächen (21) definierende, der V-Form des ersten Gehäuseteils (18) entsprechende V-Form definiert.

5. Lagergehäuse nach Anspruch 4, wobei die V-Form des ersten Gehäuseteils (18) und die V-Form des zweiten Gehäuseteils (20) die Schnittstelle (22) definieren, welche eine lasttragende Schnittstelle darstellt.

6. Lagergehäuse nach Anspruch 4 oder 5, wobei die V-Form des ersten Gehäuseteils (18) und/oder des zweiten Gehäuseteils (20) eine kegelstumpfförmige V-Form darstellt.

7. Lagergehäuse nach einem der vorherigen Ansprüche, aufweisend
eine Vorspanneinrichtung (25), die so ausgebildet ist, dass sie die Führungsflächen (19) und die Sitzflächen (21) relativ zueinander in der zweiten Richtung (D2) vorspannt; und
- wobei die Vorspanneinrichtung (25) mindestens eines der folgenden Merkmale aufweist:
- mindestens eine Schrauben- (26) und Mutter- (27) Anordnung; sowie
- zwei Schrauben- (26) und Mutter- (27) Anordnungen, die in Bezug auf die Lageraufnahme (14) auf gegenüberliegenden Seiten angeordnet sind.

8. Lagergehäuse nach einem der vorherigen Ansprüche, wobei das zweite Gehäuseteil (20) zwei Verbindungsabschnitte (29) aufweist, die auf gegenüberliegenden Seiten der Lageraufnahme (14) angeordnet sind.

9. Lagergehäuse nach Anspruch 7 und 8, wobei jede der beiden Schrauben- (26) und Mutter-(27) Anordnungen in einem übergroßen Durchgangsloch (30) des jeweiligen Verbindungsabschnitt (29) angeordnet ist, um in der dritten Richtung (D3) Toleranz zuzulassen.

10. Lagergehäuse nach einem der vorherigen Ansprüche, wobei im montierten Zustand des ersten Gehäuseteils (18) und des zweiten Gehäuseteils (20) die Führungsflächen (19) und die Sitzflächen (21) an ihrer Schnittstelle (22) die einzigen Kontaktflächen darstellen.

11. Lagergehäuse nach einem der vorhergehenden Ansprüche und zumindest nach den Ansprüchen 3 und 10, wobei im montierten Zustand das erste Gehäuseteil (18) und das zweite Gehäuseteil (20) zwischen dem Vorsprung (23) des ersten Gehäuseteils (18) und dem zugehörigen Verbindungsabschnitt (29) des zweiten Gehäuseteils (20) in der zweiten Richtung (D2) einen Versatz (31) aufweisen.

12. Lagergehäuse nach einem der Ansprüche 3 bis 11, wobei im montierten Zustand das erste Gehäuseteil (18) und das zweite Gehäuseteil (20) zwischen einem Boden (33), der zwischen den Vorsprüngen (23) des ersten Gehäuseteils (18) angeordnet ist, und dem zweiten Gehäuseteil (20) in der zweiten Richtung (D2) einen Versatz (32) aufweisen.

13. Lagergehäuse nach einem der vorherigen Ansprüche, wobei das erste Gehäuseteil (18) an einem Fahrgestell (10) angeordnet oder in dieses integriert ist.

14. Fahrgestell, aufweisend:
- zwei Längsträger (12), mit jeweils einem Lagergehäuse (11) nach einem der Ansprüche 1 bis 13, und mit
- einem in dessen Lageraufnahme (14) angeordneten Lager (13); und mit
- einem Zwischenrahmen (15), welcher Wellen (34) aufweist, die sich in Bezug auf den Zwischenrahmen (15) in entgegengesetzte Richtungen erstrecken, wobei die Wellen (34) innerhalb eines jeweiligen Lagers (13) des Lagergehäuses (11) gelagert sind.

15. Fahrgestell nach Anspruch 14, wobei:
- die Längsträger (12) eine L-Form aufweisen, bei der der kurze Schenkel (16) in einer horizontalen Ebene und der lange Schenkel (17) in einer im Wesentlichen vertikalen Ebene ausgerichtet ist;
- die Lagergehäuse (11) und der Zwischenrahmen (15) zwischen den langen Schenkeln (17) der Längsträger (12) eingeschlossen sind; und
- wobei die dritte Richtung vorzugsweise in einer Längsrichtung der Längsträger (12) verläuft.

## Revendications

1. Boîtier de palier, comprenant :
une première partie de boîtier (18) comprenant une surface de guidage (19) ;
une seconde partie de boîtier (20) comprenant une surface qui est configurée de manière à venir en butée contre la surface de guidage (19) de la première partie de boîtier (18) ;
un logement de palier (14) formé par un orifice traversant (28) à l'intérieur de ladite seconde partie de boîtier (20) et définissant une première direction (D1) à travers celle-ci ; et
dans lequel la surface de guidage (19) de la première partie de boîtier (18) et la surface de la seconde partie de boîtier (20) qui est configurée de manière à venir en butée contre la surface de guidage (19) de la première partie de boîtier (18) sont configurées de telle sorte que, lorsqu'elles se rapprochent l'une de l'autre au cours de l'assemblage dans une deuxième direction (D2) qui est transversale par rapport à ladite première direction (D1), la seconde partie de boîtier (20) est positionnée dans une troisième direction (D3) par rapport à la première partie de boîtier (18), dans lequel la troisième direction (D3) est transversale à la fois par rapport à la première direction (D1) et à la deuxième direction (D2),
**caractérisé en ce que**
la première partie de boîtier (18) comprend au moins deux surfaces de guidage (19);
la seconde partie de boîtier (20) comprend au moins deux surfaces qui sont configurées de manière à venir en butée contre la surface de guidage (19) de la première partie de boîtier (18), dans lequel lesdites deux surfaces sont des surfaces de réglage (21);
les au moins deux surfaces de guidage (19) et les au moins deux surfaces de réglage (21) sont orientées de manière oblique par rapport à la deuxième direction (D2) et à la troisième direction (D3) et configurées de telle sorte que, lorsqu'elles se rapprochent l'une de l'autre au cours de l'assemblage dans la deuxième direction (D2), la seconde partie de boîtier (20) glisse dans une position prédéterminée lorsqu'elle se rapproche de la première partie de boîtier (18) et entre en contact avec celle-ci, et la seconde partie de boîtier (20) est verrouillée dans la troisième direction (D3) par rapport à la première partie de boîtier (18).

2. Boîtier de palier selon la revendication 1, dans lequel les surfaces de guidage (19) et les surfaces de réglage (21) définissent un assemblage de forme au niveau de leur interface (22) lorsque la première partie de boîtier (18) et la seconde partie de boîtier (19) se rapprochent l'une de l'autre dans la deuxième direction (D2) au cours de l'assemblage.

3. Boîtier de palier selon la revendication 1 ou 2, dans lequel la première partie de boîtier (18) comprend au moins deux saillies (23).

4. Boîtier de palier selon la revendication 3, dans lequel :
les au moins deux saillies (23) de la première partie de boîtier (18) définissent au moins une partie d'une forme en V qui définit les surfaces de guidage (19) ; et
la seconde partie de boîtier (20) comprend un contour externe (24) qui définit au moins une partie d'une forme en V qui définit les surfaces de réglage (21) et qui correspond à la forme en V de la première partie de boîtier (18).

5. Boîtier de palier selon la revendication 4, dans lequel la forme en V de la première partie de boîtier (18) et la forme en V de la seconde partie de boîtier (20) définissent l'interface (22) qui est une interface de support de charge.

6. Boîtier de palier selon la revendication 4 ou 5, dans lequel la forme en V d'au moins l'une de la première partie de boîtier (18) et de la seconde partie de boîtier (20) est une forme en V tronquée.

7. Boîtier de palier selon l'une quelconque des revendications précédentes, comprenant un pré-tendeur (25) qui est configuré de manière à pré-tendre les surfaces de guidage (19) et les surfaces de réglage (21) les unes par rapport aux autres dans la deuxième direction (D2) ; et
dans lequel le pré-tendeur (25) comprend au moins l'un de :
au moins un ensemble de vis (26) et d'écrou (27) ; et
deux ensembles de vis (26) et d'écrou (27) qui sont agencés sur des côtés opposés par rapport au logement de palier (14).

8. Boîtier de palier selon l'une quelconque des revendications précédentes, dans lequel la seconde partie de boîtier (20) comprend deux connecteurs (29) qui sont agencés sur des côtés opposés par rapport au logement de palier (14).

9. Boîtier de palier selon les revendications 7 et 8, dans lequel chacun des deux ensembles de vis (26) et d'écrou (27) est agencé à travers un orifice traversant surdimensionné (30) dans un connecteur associé (29) afin d'assurer un jeu dans la troisième direction (D3).

10. Boîtier de palier selon l'une quelconque des revendications précédentes, dans lequel, dans un état assemblé de la première partie de boîtier (18) et de la seconde partie de boîtier (20), les surfaces de guidage (19) et les surfaces de réglage (21) définissent les seules surfaces de contact au niveau de leur interface (22).

11. Boîtier de palier selon l'une quelconque des revendications précédentes et au moins les revendications 3 et 10, dans lequel, dans un état assemblé de la première partie de boîtier (18) et de la seconde partie de boîtier (20), il existe un décalage (31) dans la deuxième direction (D2) entre la saillie (23) de la première partie de boîtier (18) et le connecteur associé (29) de la seconde partie de boîtier (20).

12. Boîtier de palier selon l'une quelconque des revendications 3 à 11, dans lequel dans état assemblé de la première partie de boîtier (18) et de la seconde partie de boîtier (20), il existe un décalage (32) dans la deuxième direction (D2) entre une base (33), qui est agencée entre la saillie (23) de la première partie de boîtier (18), et la seconde partie de boîtier (20).

13. Boîtier de palier selon l'une quelconque des revendications précédentes, dans lequel la première partie de boîtier (18) est agencée sur un châssis de véhicule (10) ou intégrée à ce dernier.

14. Châssis de véhicule, comprenant :
deux poutrelles longitudinales (12), comprenant chacune un boîtier de palier (11) selon l'une quelconque des revendications 1 à 13 avec un palier (13) agencé dans le logement de palier (14) de ces dernières ;
et
un bâti intermédiaire (15) comportant des arbres (34) s'étendant dans des directions opposées par rapport audit bâti intermédiaire (15), dans lequel lesdits arbres (34) sont supportés à l'intérieur d'un palier (13) respectif du boîtier de palier (11).

15. Châssis de véhicule selon la revendication 14, dans lequel :
les poutrelles longitudinales (12) présentent une forme en L dont une branche courte (16) est orientée dans un plan horizontal et une branche longue (17) est orientée sensiblement verticalement ;
les branches longues (17) des poutrelles longitudinales (12) contiennent les boîtiers de palier (11) et le bâti intermédiaire (15) entre elles ; et
dans lequel la troisième direction s'étend, de préférence, dans une direction longitudinale des poutrelles longitudinales (12).
